# EUROPEAN PATENT APPLICATION

(11) **EP 3 795 286 A1**
(43) Date of publication of application: **24.03.2021**
(21) Application number: 20195808.9
(22) Date of filing: 11.09.2020
(51) Int. Cl.: B23K 11/11, B23K 11/30, B23K 11/34

(54) **RESISTANCE WELDING METHOD AND RESISTANCE WELDING APPARATUS**

(30) Priority: 12.09.2019 JP 2019166226
(71) Applicant: Mazda Motor Corporation, Aki-gun, Hiroshima 730-8670 (JP)
(72) Inventor: YAMAGUCHI, Kojiro, Hiroshima 730-8670 (JP); TAKAHASHI, Katsunori, Hiroshima 730-8670 (JP); MORIWAKI, Motonori, Hiroshima 730-8670 (JP); NAKAI, Masanori, Hiroshima 730-8670 (JP); ICHIHARA, Koichiro, Hiroshima 730-8670 (JP); UJIHIRA, Naoki, Hiroshima 730-8670 (JP); SATO, Hiroki, Hiroshima 730-8670 (JP)
(74) Representative: Behr, Wolfgang

(57) **Abstract**

A resistance welding apparatus includes: a cleaning system that, before a welding electrode contacts a welding target, supplies a fluid to clean, of a contact portion of the welding electrode and a contact portion of the welding target, at least the contact portion of the welding target, the contact portion of the welding target being to contact the welding electrode, the contact portion of the welding electrode being to contact the welding target; and a cooling system that, during and/or after welding the welding target by the welding electrode, supplies the fluid to cool the welding electrode and a portion near the contact portion of the welding target.

## Description

### BACKGROUND

The technique disclosed herein relates to a resistance welding apparatus and a resistance welding method.

There has been a known technology of welding a welding target by having welding electrodes contact the welding target and supply an electric current to the welding target via the welding electrodes (i.e., resistance welding). The target objects are typically a plurality of welding-target members (i.e., metal plates) stacked on each other.

In such a resistance welding, a passage is provided in each of the welding electrodes and cooling water is supplied inside the passage to cool the welding electrode, for the purpose of avoiding defects caused by excessive heat input to the welding target. Further, for example, Japanese Unexamined Patent Application No. H8-47783 describes a technique in which an airflow containing cooling water droplets (i.e., mist of cooling water) is injected to a portion near an electrode contact portion of the welding target, which contacts the welding electrodes, so as to cool the portion near the electrode contact portion.

### SUMMARY

The welding target may have a foreign matter adhering to its surfaces (so-called contamination). If an electrode contact portion of the welding target has a foreign matter adhered thereto, there will be a point contact between the welding electrode and the welding target at a portion where the foreign matter adheres, rather than a surficial contact with the welding target, when the welding electrode contacts the welding target. This leads to a difficulty in achieving a stable electric current path. Further, since heat is easily generated at the portion of the point contact, there is a problem that the wear on the welding electrode is induced thus alloying the welding electrode. This leads to cumbersome maintenance and management of the welding electrode, consequently causing an increase in the maintenance costs of the welding electrode.

An approach to address this issue is to clean the electrode contact portion of the welding target before the welding electrode contacts the welding target. This, however, requires a cleaning apparatus in addition to the cooling system as described in the above-cited prior art document, in the resistance welding apparatus. For this reason, the resistance welding apparatus may become complicated and the costs of the resistance welding apparatus may increase.

The technique disclosed herein provides a resistance welding apparatus and a resistance welding method, whereby cooling of a welding target and welding electrodes and cleaning of the welding target are easily possible, without an increase in the costs.

The technique disclosed herein is drawn to a resistance welding apparatus including a welding electrode that contacts a welding target and supplies an electric current to the welding target to weld the welding target, the resistance welding apparatus including: a cleaning system that, before the welding electrode contacts the welding target, supplies a fluid to clean, of a contact portion of the welding electrode and a contact portion of the welding target, at least the contact portion of the welding target, the contact portion of the welding target being to contact the welding electrode, the contact portion of the welding electrode being to contact the welding target; and a cooling system that, during and/or after welding the welding target by the welding electrode, supplies the fluid to cool the welding electrode and a portion near the contact portion of the welding target.

The cleaning by the cleaning system allows reduction or omission of a step of dressing the contact portion of the welding electrode to the welding target, extension of a replacement cycle of the welding electrode, and reduction of the maintenance costs of the welding electrode. Further, since the same fluid is used for the cleaning system and the cooling system, the same fluid supply source and the passages and the like in which the fluid flows can be shared between the cleaning system and the cooling system. Therefore, cooling of the welding target and the welding electrode and cleaning of the welding target are possible with a simple structure, without an increase in the costs of the resistance welding apparatus.

The cleaning system may include a passage which is formed inside the welding electrode and through which the fluid flows, and a cleaning injection port which is connected to the passage and open to a surface of the welding electrode, and which injects the fluid from the passage to the contact portion of the welding target. The cooling system may include the passage, and a cooling injection port which is connected to the passage and open to the surface of the welding electrode and which injects the fluid from the passage to a portion near the contact portion of the welding target.

Since the welding electrodes have the passage shared between the cleaning system and the cooling system, the welding electrodes can be cooled more easily.

The welding electrode may include a pair of electrodes configured to contact separate locations of a single surface of the welding target and to supply an electric current to the welding target, the contact portion of the welding target including a plurality of contact portions which are to contact the pair of electrodes, the contact portion of the welding electrode including a plurality of contact portions which are to contact the welding target. The cleaning system may be configured to clean, of one of the contact portions of one of the pair of electrodes and one of the contact portions of the welding target, at least the one of the contact portions of the welding target, and to clean, of another of the contact portions of another of the pair of electrodes and another of the contact portions of the welding target, at least the another of the contact portions of the welding target. The cooling system may be configured to cool the pair of electrodes and portions near the contact portions of the welding target.

Therefore, in a case of performing indirect type resistance welding by using such a pair of electrodes, cooling of the welding target and the welding electrodes (pair of electrodes) and cleaning of the welding target are possible with a simple structure.

The welding electrode may include a pair of electrodes configured to contact separate locations of a single surface of the welding target and to supply an electric current to the welding target, the contact portion of the welding target including a plurality of contact portions which are to contact the pair of electrodes, the contact portion of the welding electrode including a plurality of contact portions which are to contact the welding target. The pair of electrode may include an interior electrode having the contact portion which is to contact the welding target and an exterior electrode having the contact portion which is to contact the welding target, the exterior electrode being arranged on an outer circumferential side of the interior electrode, and being distanced from the interior electrode, the contact portions of the welding target being to contact the interior electrode and the exterior electrode. The cleaning system may be configured to clean, of the contact portion of the interior electrode, the contact portion of the exterior electrode, and the contact portions of the welding target, at least the contact portions of the welding target. The cooling system may be configured to cool the interior electrode and a portion between the contact portions of the welding target.

Therefore, in a case of performing indirect type resistance welding by using the interior electrode and the exterior electrode, cooling of the welding target and the welding electrodes (interior electrode) and cleaning of the welding target are possible with a simple structure.

The welding electrode may include a first electrode and a second electrode which contact one side and an opposite side of the welding target, so as to sandwich the welding target therebetween, and which supply an electric current to the welding target, the contact portion of the welding target including first, second, third, and fourth contact portions. The first electrode may include a first interior electrode having the contact portion which is to contact the welding target and a first exterior electrode having the contact portion which is to contact the welding target, the first exterior electrode being arranged on an outer circumferential side of the first interior electrode and being distanced from the first interior electrode, the first and second contact portions of the welding target being to contact the first interior electrode and the first exterior electrode. The second electrode may include a second interior electrode having the contact portion which is to contact the welding target and a second exterior electrode having the contact portion which is to contact the welding target, the second exterior electrode being arranged on an outer circumferential side of the second interior electrode and being distanced from the second interior electrode, the third and fourth contact portions of the welding target being to contact the second interior electrode and the second exterior electrode. The cleaning system may be configured to clean, of the contact portion of the first interior electrode, the contact portion of the first exterior electrode, and the first and second contact portions of the welding target, at least the first and second contact portions of the welding target, and to clean, of the contact portion of the second interior electrode, the contact portion of the second exterior electrode, and the third and fourth contact portions of the welding target, at least the third and fourth contact portions of the welding target. The cooling system may be configured to cool the first interior electrode and a portion between the first and second contact portions of the welding target, and to cool the second interior electrode and a portion between the third and fourth contact portions of the welding target.

As described, in a case where the welding electrode includes the first electrode (i.e., the first electrode, the first exterior electrode) and the second interior electrode (i.e., the second interior electrode, the second exterior electrode) which contact on one side and an opposite side of the welding target, the molten material inside the welding target at the time of welding is hardly movable to the outer circumferential side beyond the portion pressurized by the first exterior electrode and the second exterior electrode, and moves toward the surfaces of the welding target (i.e., surfaces on both sides where the first interior electrode and the first exterior electrode contact respectively, and/or surfaces on both sides where the second interior electrode and the second exterior electrode contact respectively). For this reason, there is a high possibility of a defect taking place on the surfaces of the welding target.

However, since the cooling system cools a portion between both the contact portions of the welding target to respectively contact the first interior electrode and the first exterior electrode, and a portion between the contact portions of the welding target to respectively contact the second interior electrode and the second exterior electrode, it is possible to keep the molten material inside the welding target from reaching the surfaces.

Therefore, cooling of the welding target and the welding electrodes (interior electrodes) and cleaning of the welding target are possible with a simple structure, and a defect on the surfaces of the welding target can substantially be avoided.

Another technique disclosed herein is drawn to a resistance welding method of welding a welding target by having welding electrodes contact a welding target and supplying an electric current to the welding target through the welding electrodes. The method includes: cleaning, before the welding electrode contacts the welding target, of a contact portion of the welding electrode and a contact portion of the welding target, at least the contact portion of the welding target by supplying a fluid, the contact portion of the welding target being to contact the welding electrode, the contact portion of the welding electrode being to contact the welding target; and cooling, during and/or after welding the welding target by the welding electrode, the welding electrode and a portion near the contact portion of the welding target by supplying the fluid.

Since the same fluid is used for the cleaning and the cooling in the above resistance welding method, cooling of the welding target and the welding electrode and cleaning of the welding target are easily possible, without complicating both of the steps and an increase in the costs of an apparatus used for both of the steps.

The welding electrode may include a passage which is formed inside the welding electrode and through which the fluid flows, a cleaning injection port which is connected to the passage and open to a surface of the welding electrode, and which injects the fluid from the passage to the contact portion of the welding target, and a cooling injection port which is connected to the passage and open to the surface of the welding electrode and which injects the fluid from the passage to a portion near the contact portion of the welding target. In the cleaning, the fluid from the passage may be injected to the contact portion of the welding target through the cleaning injection port. In the cooling, the fluid from the passage may be injected to the portion near the contact portion of the welding target through the cooling injection port.

This enables easier cooling of the welding electrode.

The welding electrode may include a pair of electrodes configured to contact separate locations of a single surface of the welding target and to supply an electric current to the welding target, the contact portion of the welding target including a plurality of contact portions which are to contact the pair of electrodes, the contact portion of the welding electrode including a plurality of contact portions which are to contact the welding target. The cleaning may be a step of cleaning, of one of the contact portions of one of the pair of electrodes and one of the contact portions of the welding target, at least the one of the contact portions of the welding target, and to clean, of another of the contact portions of another of the pair of electrodes and another of the contact portions of the welding target, at least the another of the contact portions of the welding target. The cooling may be a step of cooling the pair of electrodes and portions near the contact portions of the welding target.

Therefore, in a case of performing indirect type resistance welding, cooling of the welding target and the welding electrodes (pair of electrodes) and cleaning of the welding target can be easily performed.

The welding electrode may include a pair of electrodes configured to contact separate locations of a single surface of the welding target and to supply an electric current to the welding target, the contact portion of the welding target including a plurality of contact portions which are to contact the pair of electrodes, the contact portion of the welding electrode including a plurality of contact portions which are to contact the welding target. The pair of electrode may include an interior electrode having the contact portion which is to contact the welding target and an exterior electrode having the contact portion which is to contact the welding target, the exterior electrode being arranged on an outer circumferential side of the interior electrode, and being distanced from the interior electrode, the contact portions of the welding target being to contact the interior electrode and the exterior electrode. The cleaning may be a step of cleaning, of the contact portion of the interior electrode, the contact portion of the exterior electrode, and the contact portions of the welding target, at least the contact portions of the welding target. The cooling may be a step of cooling the interior electrode and a portion between the contact portions of the welding target.

Therefore, in a case of performing indirect type resistance welding by using the interior electrode and the exterior electrode, cooling of the welding target and the welding electrodes (interior electrode) and cleaning of the welding target can be easily performed.

The welding electrode may include a first electrode and a second electrode which contact different surfaces of the welding target, so as to sandwich the welding target therebetween, and which supply an electric current to the welding target, the contact portion of the welding target including first, second, third, and fourth contact portions. The first electrode may include a first interior electrode having the contact portion which is to contact the welding target and a first exterior electrode having the contact portion which is to contact the welding target, the first exterior electrode being arranged on an outer circumferential side of the first interior electrode and being distanced from the first interior electrode, the first and second contact portions of the welding target being to contact the first interior electrode and the first exterior electrode. The second electrode may include a second interior electrode having the contact portion which is to contact the welding target and a second exterior electrode having the contact portion which is to contact the welding target, the second exterior electrode being arranged on an outer circumferential side of the second interior electrode and being distanced from the second interior electrode, the third and fourth contact portions of the welding target being to contact the second interior electrode and the second exterior electrode. The cleaning may be a step of cleaning, of the contact portion of the first interior electrode, the contact portion of the first exterior electrode, and the first and second contact portions of the welding target, at least the first and second contact portions of the welding target, and cleaning, of the contact portion of the second interior electrode, the contact portion of the second exterior electrode, and the third and fourth contact portions of the welding target, at least the third and fourth contact portions of the welding target. The cooling may be a step of cooling, the first interior electrode and a portion between the first and second contact portions of the welding target, and to cool the second interior electrode and a portion between the third and fourth contact portions of the welding target.

Therefore, cooling of the welding target and the welding electrodes (interior electrodes) and cleaning of the welding target can be easily performed, and a defect on the surface of the welding target can substantially be avoided.

### BRIEF DESCRIPTION OF THE DRAWINGS

FIG. 1 is a sectional view showing a main part of a resistance welding apparatus according to a first embodiment.
FIG. 2 shows a first interior electrode and a first exterior electrode of a first electrode, as seen from their distal ends.
FIG. 3 is a timing chart of cleaning, pressurization, supplying of an electric current, and cooling in a case of using the resistance welding apparatus to weld a welding target.

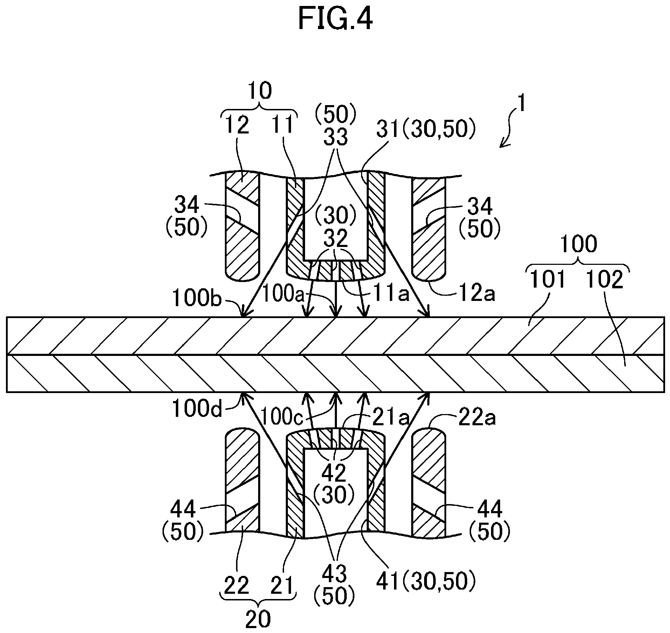

FIG. 4 is a diagram corresponding to FIG. 1 showing a state in which cleaning is in progress.
FIG. 5 is a diagram corresponding to FIG. 1 showing a state in which cooling is in progress.
FIG. 6 is a diagram corresponding to FIG. 3, with a timing of start cooling being differentiated from that of FIG. 3.
FIG. 7 is a sectional view showing a main part of a resistance welding apparatus according to a second embodiment.
FIG. 8 is a diagram corresponding to FIG. 7 showing a state in which cleaning is in progress.
FIG. 9 is a diagram corresponding to FIG. 1 showing a state in which cooling is in progress.
FIG. 10 is a sectional view taken along line X-X in FIG. 9.
FIG. 11 is a sectional view showing a main part of an indirect type resistance welding apparatus having an interior electrode and an exterior electrode.
FIG. 12 is a sectional view showing a main part of an indirect type resistance welding apparatus having a pair of column-like electrodes.

### DETAILED DESCRIPTION

Hereinafter, a resistance welding apparatus and a resistance welding method will be described in detail with reference to drawings.

### (First Embodiment)

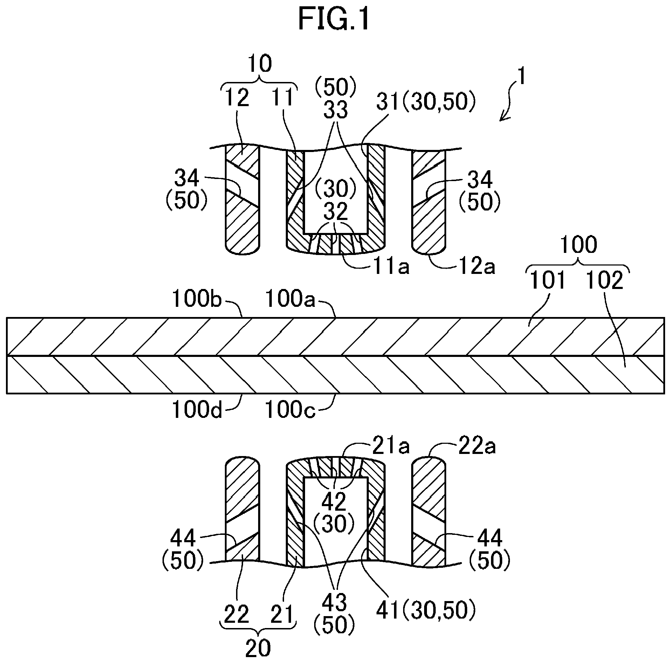

FIG. 1 shows a main part of a resistance welding apparatus 1, according to a first embodiment. The resistance welding apparatus 1 includes welding electrodes (first electrode 10 and second electrode 20 described hereinafter) that contact a welding target 100 and conducting an electric current through the welding target 100 thereby welding the welding target 100. In the present embodiment, the welding target 100 includes a plurality of (two in this case) welding target members 101 and 102 which are stacked on each other. The two welding target members 101 and 102 are metal members (i.e., metal plates), and for example, one of them is an iron-based member (e.g., steel member), and the other one is an aluminum-based member (e.g., aluminum alloy). Alternatively, both of the welding target members 101 and 102 may be iron-based members.

In the present embodiment, the welding electrode includes a first electrode 10 and a second electrode 20 which contact one side and the opposite side of the welding target 100, so as to sandwich the welding target 100 therebetween, and which supplies an electric current to the welding target 100. In the present embodiment, the first electrode 10 and the second electrode 20 are arranged to face each other in the upward and downward directions. Note that the directions in which the first electrode 10 and the second electrode 20 face each other are not limited to the upward and downward directions.

The first electrode 10 has a first interior electrode 11 having a substantially columnar shape, and a first exterior electrode 12 having a substantially cylindrical shape, which is arranged on the outer circumferential side of the first interior electrode 11 and distanced from the first interior electrode 11. In the present embodiment, the first exterior electrode 12 is arranged coaxially with the first interior electrode 11. However, these electrodes do not have to be coaxial. Distal ends of the first interior electrode 11 and the first exterior electrode 12, that is, portions to contact the welding target (hereinafter, contact portions 11a and 12a) have curved surfaces slightly protruding downward. The curvature of the curved surfaces of these contact portions 11a and 12a is appropriately set based on, e.g., the operating conditions of the resistance welding apparatus 1, the materials of the contact portions 11a and 12a, and the life. Note that the first exterior electrode 12 does not have to be a tubular form continuous in the circumferential direction, and may have a plurality of segments aligned in the circumferential direction.

The second electrode 20 has a second interior electrode 21 having a substantially columnar shape, and a second exterior electrode 22 having a substantially cylindrical shape, which is arranged on the outer circumferential side of the second interior electrode 21 and distanced from the second interior electrode 21. The second exterior electrode 22 is also arranged coaxially with the second interior electrode 21. However, these electrodes do not have to be coaxial. The second interior electrode 21 faces the first interior electrode 11 in the upward and downward directions, and the second exterior electrode 22 faces the first exterior electrode 12 in the upward and downward directions. Distal ends of the second interior electrode 21 and the second exterior electrode 22, that is, portions to contact the welding target (hereinafter, contact portions 21a and 22a) have curved surfaces slightly protruding upward. The curvature of the curved surfaces of these contact portions 21a and 22a is set in a similar manner to the curvature of the curved surfaces of the contact portions 11a and 12a. Note that the second exterior electrode 22 does not have to be a tubular form continuous in the circumferential direction, and may have a plurality of segments aligned in the circumferential direction.

The first interior electrode 11, the first exterior electrode 12, the second interior electrode 21, and the second exterior electrode 22 are configured to be movable upward and downward by a pressurizing device (not shown), and configured to be capable of contacting the welding target 100 and pressurizing the welding target 100. The pressurizing device is configured as, e.g., an air cylinder, a hydraulic cylinder, and a servo motor. The electrode forces of the first interior electrode 11 and the second interior electrode 21 to the welding target 100 (hereinafter, interior electrode forces) are the same, and the electrode forces of the first exterior electrode 12 and the second exterior electrode 22 to the welding target 100 (hereinafter, exterior electrode forces) are the same. The exterior electrode forces may be the same as or different from the interior electrode forces.

The resistance welding apparatus 1 welds the welding target 100 (i.e., the welding target members 101 and 102) by conducting an electric current between the first interior electrode 11 and the first exterior electrode 12, between the second interior electrode 21 and the second exterior electrode 22, between the first interior electrode 11 and the second interior electrode 21, between the first interior electrode 11 and the second exterior electrode 22, or between the second interior electrode 21 and the first exterior electrode 12, while pressurizing the welding target 100 by the first interior electrode 11, the first exterior electrode 12, the second interior electrode 21, and the second exterior electrode 22.

The first exterior electrode 12 is located near the first interior electrode 11, on its outer circumferential side. Similarly, the second exterior electrode 22 is located near the second interior electrode 21, on its outer circumferential side. The distance between the first interior electrode 11 and the first exterior electrode 12 (i.e., the distance between the second interior electrode 21 and the second exterior electrode 22) is set so that the welding target members 101 and 102 are properly welded in any of the cases of supplying an electric current is supplied between the first interior electrode 11 and the first exterior electrode 12, between the second interior electrode 21 and the second exterior electrode 22, between the first interior electrode 11 and the second exterior electrode 22, and the second interior electrode 21 and the first exterior electrode 12.

The resistance welding apparatus 1 includes a cleaning system 30 and a cooling system 50. In the present embodiment, the same fluid is used in the cleaning system 30 and the cooling system 50.

The cleaning system 30 supplies the fluid to clean a first interior electrode contact portion 100a of the welding target 100 to contact the first interior electrode 11, and a first exterior electrode contact portion 100b of the welding target 100 to contact the first exterior electrode 12, before the first electrode 10 (i.e., the first interior electrode 11 and the first exterior electrode 12) contacts the welding target 100.

Further, the cleaning system 30 supplies the fluid to clean a second interior electrode contact portion 100c of the welding target 100 to contact the second interior electrode 21, and a second exterior electrode contact portion 100d of the welding target 100 to contact the second exterior electrode 22, before the second electrode 20 (i.e., the second interior electrode 21 and the second exterior electrode 22) contacts the welding target 100. The cleaning of the second interior electrode contact portion 100c and the second exterior electrode contact portion 100d of the welding target 100 takes place during the substantially same period as the cleaning of the first interior electrode contact portion 100a and the first exterior electrode contact portion 100b of the welding target 100.

The fluid in the present embodiment is compressed air containing dry ice and dry ice blast cleaning is performed to the first interior electrode contact portion 100a, the first exterior electrode contact portion 100b, the second interior electrode contact portion 100c, and the second exterior electrode contact portion 100d of the welding target 100. As long as both cleaning and cooling are possible, the fluid is not limited to the one described above, and any fluid may be adoptable.

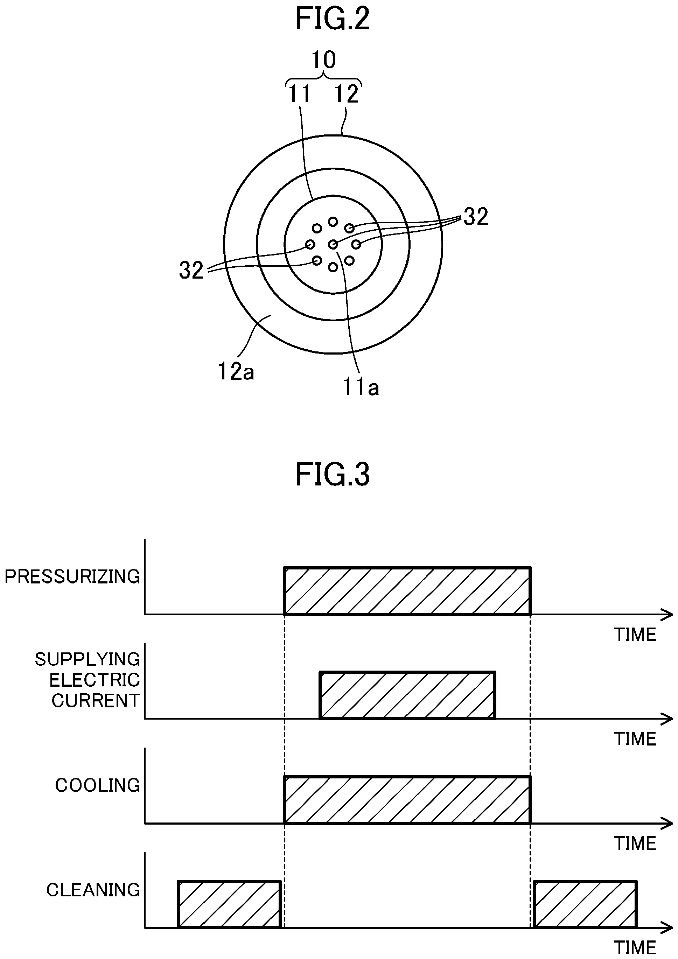

Specifically, the cleaning system 30 includes a passage 31 formed in the first interior electrode 11 through which the fluid flows, and a plurality of cleaning injection ports 32 connected to the passage 31 and open to the surface (more specifically in the contact portion 11a) of the first interior electrode 11 so as to inject the fluid from the passage 31 to the first interior electrode contact portion 100a. For example, as shown in FIG. 2, the cleaning injection ports 32 are open at the center of the contact portion 11a and around the center so as to align in the circumferential direction at equal intervals. In the present embodiment, cooling injection ports 33 described hereinafter also serve as the cleaning injection ports, and the cooling injection ports 33 inject the fluid from the passage 31 to the first exterior electrode contact portion 100b.

Further, the cleaning system 30 further includes a passage 41 formed in the second interior electrode 21 through which the fluid flows, and a plurality of cleaning injection ports 42 connected to the passage 41 and open to the surface (more specifically in the contact portion 21a) of the second interior electrode 21 so as to inject the fluid from the passage 41 to the second interior electrode contact portion 100c. The arrangement of the cleaning injection ports 42 in the second interior electrode 21 is similar to that of the cleaning injection port 32 in the first interior electrode 11. In the present embodiment, a cooling injection port 43 described hereinafter also serves as the cleaning injection port, and the cooling injection port 43 injects the fluid from the passage 41 to the second exterior electrode contact portion 100d. Both the passage 31 in the first interior electrode 11 and the passage 41 in the second interior electrode 21 are connected to a not-shown dry ice blast washer (i.e., a fluid supply source).

During a process of welding the welding target 100 by the welding electrode (i.e., the first electrode 10 and/or the second electrode 20), the cooling system 50 supplies the fluid to the first interior electrode 11 and a portion between the first interior electrode contact portion 100a and the first exterior electrode contact portion 100b of the welding target 100 so as to cool the first interior electrode 11 and the portion between the first interior electrode contact portion 100a and the first exterior electrode contact portion 100b. At this time, the contact portions 11a and 12a of the first interior electrode 11 and the first exterior electrode 12 contact the first interior electrode contact portion 100a and the first exterior electrode contact portion 100b of the welding target 100, respectively. In the present embodiment, the portion between the first interior electrode contact portion 100a and the first exterior electrode contact portion 100b of the welding target 100 is also a portion near the first interior electrode contact portion 100a of the welding target 100, and is also a portion near the first exterior electrode contact portion 100b of the welding target 100.

Further, during a process of welding the welding target 100 by the welding electrode (i.e., the first electrode 10 and/or the second electrode 20), the cooling system 50 supplies the fluid to the second interior electrode 21 and a portion between the second interior electrode contact portion 100c and the second exterior electrode contact portion 100d of the welding target 100 so as to cool the second interior electrode 21 and the portion between the second interior electrode contact portion 100c and the second exterior electrode contact portion 100d. At this time, the contact portions 21a and 22a of the second interior electrode 21 and the second exterior electrode 22 contact the second interior electrode contact portion 100c and the second exterior electrode contact portion 100d of the welding target 100, respectively. In the present embodiment, the portion between the second interior electrode contact portion 100c and the second exterior electrode contact portion 100d of the welding target 100 is also a portion near the second interior electrode contact portion 100c of the welding target 100, and is also a portion near the second exterior electrode contact portion 100d of the welding target 100. Cooling of the second interior electrode 21 and the portion between the second interior electrode contact portion 100c and the second exterior electrode contact portion 100d of the welding target 100 takes place during substantially the same period as cooling of the first interior electrode 11 and the portion between the first interior electrode contact portion 100a and the first exterior electrode contact portion 100b of the welding target 100.

Specifically, the cooling system 50 includes a passage 31 provided in the first interior electrode 11, and a plurality of cooling injection ports 33 connected to the passage 31 and open to the surface (more specifically to an outer circumferential face) of the first interior electrode 11 so as to inject the fluid from the passage 31 to a portion between the interior electrode contact portion 100a and the first exterior electrode contact portion 100b of the welding target 100. The cooling injection ports 33 are provided in the surface (more specifically, in the outer circumferential face) of the first interior electrode 11 so as to align at equal intervals in the circumferential direction. The number of cooling injection ports 33 is set so that the portion between the first interior electrode contact portion 100a and the first exterior electrode contact portion 100b of the welding target 100 can be cooled throughout the full circumference as much as possible.

Further, the cooling system 50 includes a passage 41 provided in the second interior electrode 21, and a plurality of cooling injection ports 43 connected to the passage 41 and open to an outer circumferential face of the second interior electrode 21 so as to inject the fluid from the passage 41 to a portion between the second interior electrode contact portion 100c and the second exterior electrode contact portion 100d of the welding target 100. The cooling injection ports 43 are provided in the outer circumferential face of the second interior electrode 21 so as to align at equal intervals in the circumferential direction. The number of cooling injection ports 43 is set so that the portion between the second interior electrode contact portion 100c and the second exterior electrode contact portion 100d of the welding target 100 can be cooled throughout the full circumference as much as possible.

The fluid injected by the cooling injection ports 33 and 43 is the same as the fluid injected by the cleaning injection ports 32 and 42. The fluid injected by the cooling injection ports 33 cools the first interior electrode 11 by passing through the passage 31 in the first interior electrode 11, before the fluid is injected. Further, the fluid injected by the cooling injection ports 43 cools the second interior electrode 21 by passing through the passage 41 in the second interior electrode 21, before the fluid is injected.

The cooling injection ports 33 are each sloped downward (i.e., toward the welding target 100), in a radially outward direction of the first interior electrode 11. Therefore, the fluid injected from the cooling injection ports 33 is injected toward the portion between the first interior electrode contact portion 100a and the first exterior electrode contact portion 100b of the welding target 100. As described, when the fluid is injected from the cooling injection ports 33, the contact portion 11a of the first interior electrode 11 contacts the first interior electrode contact portion 100a of the welding target 100. Therefore, the cleaning injection ports 32 are closed. After the fluid injected from the cooling injection ports 33 cools the portion between the first interior electrode contact portion 100a and the first exterior electrode contact portion 100b of the welding target 100, the fluid is released to the outside the first exterior electrode 12 through a plurality of release holes 34 provided in a circumferential wall of the first exterior electrode 12. The release holes 34 constitute a part of the cooling system. The number of release holes 34 may be any given number and may be set irrespective of the cooling injection ports 33, as long as the portion between the first interior electrode contact portion 100a and the first exterior electrode contact portion 100b of the welding target 100 can be properly cooled.

The cooling injection ports 43 are each sloped upward (i.e., toward the welding target 100), in a radially outward direction of the second interior electrode 21. Therefore, the fluid injected from the cooling injection ports 43 is injected toward the portion between the second interior electrode contact portion 100c and the second exterior electrode contact portion 100d of the welding target 100. As described, when the fluid is injected from the cooling injection ports 43, the contact portion 21a of the second interior electrode 21 contacts the second interior electrode contact portion 100c of the welding target 100. Therefore, the cleaning injection ports 42 are closed. After the fluid injected from the cooling injection ports 43 cools the portion between the second interior electrode contact portion 100c and the second exterior electrode contact portion 100d of the welding target 100, the fluid is released to the outside the second exterior electrode 22 through a plurality of release holes 44 provided in a circumferential wall of the second exterior electrode 22. The release holes 44 also constitute a part of the cooling system. The number of release holes 44 may be any given number and may be set irrespective of the cooling injection ports 43, as long as the portion between the second interior electrode contact portion 100c and the second exterior electrode contact portion 100d of the welding target 100 can be properly cooled.

In the present embodiment, the fluid injected from the cooling injection ports 33 cools the portion between the first interior electrode contact portion 100a and the first exterior electrode contact portion 100b of the welding target 100, and cools a portion from the release holes 34 to the distal end of the first exterior electrode 12. Further, the fluid injected from the cooling injection ports 43 cools the portion between the second interior electrode contact portion 100c and the second exterior electrode contact portion 100d of the welding target 100, and cools a portion from the release holes 44 to the distal end of the second exterior electrode 22.

When the resistance welding apparatus 1 configured as described above is used to weld the welding target 100, steps of cleaning, pressurizing, supplying of an electric current, and cooling take place according to the timing chart of FIG. 3.

First, the pressurizing device is actuated to bring the first interior electrode 11, the first exterior electrode 12, the second interior electrode 21, and the second exterior electrode 22 closer to the welding target 100. When the distances between the welding target 100 and the electrodes 11, 12, 21, and 22 are suitable for cleaning, actuation of the pressurizing device is temporarily stopped. Note that only the first interior electrode 11 and the second interior electrode 21 may be brought close to the welding target 100.

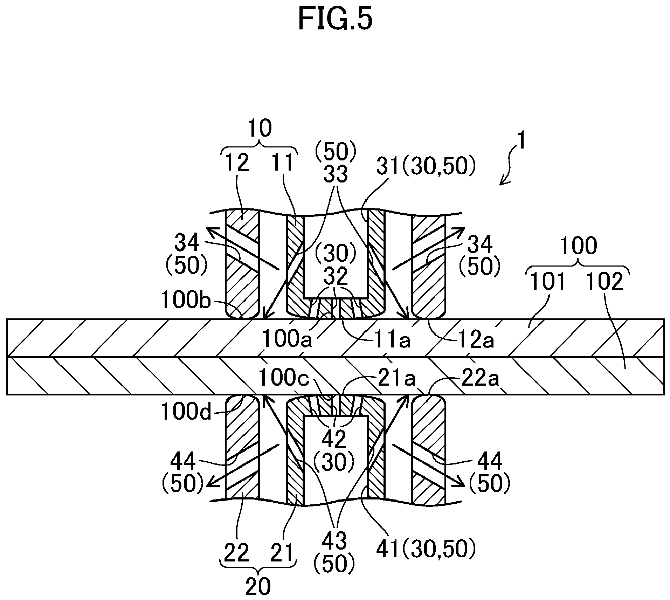

Then, as shown in FIG. 3, the dry ice blast washer is actuated for cleaning. At this time, as shown in FIG. 5, the fluid is supplied from the dry ice blast washer to the passages 31 and 41, and then injected from the passages 31 and 41 to the first interior electrode contact portion 100a and the second interior electrode contact portion 100c of the welding target 100 through the cleaning injection ports 32 and 42. This way, the first interior electrode contact portion 100a and the second interior electrode contact portion 100c of the welding target 100 are cleaned. Further, the fluid is injected to the first exterior electrode contact portion 100b and the second exterior electrode contact portion 100d of the welding target 100 through the cooling injection ports 33 and 43 also serving as the cleaning injection ports. This way, the first exterior electrode contact portion 100b and the second exterior electrode contact portion 100d of the welding target 100 are cleaned.

After that, the pressurizing device is actuated again to contact the first interior electrode 11, the first exterior electrode 12, the second interior electrode 21, and the second exterior electrode 22 to the welding target 100 and start the pressurization. As shown in FIG. 3, after this pressurization is started, an electric current is supplied to the welding target 100 to weld the welding target 100. Further, at substantially the same time the pressurization is started, the dry ice blast washer is actuated to start the cooling. The pressurization and the cooling are set to end after the supply of the electric current ends so that the pressurization and the cooling reliably take place during welding. Note that the pressurization, cooling, and supplying of an electric current may be started at substantially the same time, and may be ended at substantially the same time.

During the process of cooling, the fluid is injected from the cooling injection ports 33 toward the portion between the first interior electrode contact portion 100a and the first exterior electrode contact portion 100b of the welding target 100, as shown in FIG. 5. The fluid that has been injected is discharged to the outside of the first exterior electrode 12 through the release holes 34 of the first exterior electrode 12. Further, the fluid is injected to the portion between the second interior electrode contact portion 100c and the second exterior electrode contact portion 100d of the welding target 100 through the cooling injection ports 43. The fluid that has been injected is discharged to the outside of the second exterior electrode 22 through the release holes 44 of the second exterior electrode 22.

In the present embodiment, the fluid injected from the cooling injection ports 33 cools the portion between the first interior electrode contact portion 100a and the first exterior electrode contact portion 100b of the welding target 100, and cools, from the outer surface, a portion from the release holes 34 to the distal end of the first exterior electrode 12. Further, the fluid cools the first interior electrode 11 from inside by flowing in the passage 31 of the first interior electrode 11.

Further, the fluid injected from the cooling injection ports 43 cools the portion between the second interior electrode contact portion 100c and the second exterior electrode contact portion 100d of the welding target 100, and cools, from the outer surface, a portion from the release holes 44 to the distal end of the second exterior electrode 22. Further, the fluid cools the second interior electrode 21 from inside by flowing in the passage 41 of the second interior electrode 21.

Note that cooling of the first exterior electrode 12 and the second exterior electrode 22 does not necessarily have to be performed, whether an electric current is supplied or not supplied to the welding target 100. Any electrode out of the first exterior electrode 12 and the second exterior electrode 22, which is not cooled, may be lifted from the welding target 100 while the cooling injection ports 33 (and 43) inject the fluid. In this case, the fluid is released to the outside the electrode through the clearance between the electrode lifted and the welding target 100. To always have the electrode lifted from the welding target 100, there is no need to provide the release holes 34 (and 44) to that electrode.

In the present embodiment, as shown in FIG. 3, cleaning takes place again after the pressurization and cooling are ended. That is, the first interior electrode 11, the first exterior electrode 12, the second interior electrode 21, and the second exterior electrode 22 are positioned in their respective positions similar to those at the time of cleaning before welding, and then the dry ice blast washer is actuated.

Here, a molten material inside the welding target 100 at the time of welding can hardly move toward outer circumferential side of the portion pressed by the exterior electrode force applied by the first exterior electrode 12 and the second exterior electrode 22, and moves toward the surfaces of the welding target 100 (i.e., toward the surface between the first interior electrode contact portion 100a and the first exterior electrode contact portion 100b, and/or the surface between the second interior electrode contact portion 100c and the second exterior electrode contact portion 100d). For this reason, there is a high possibility of a defect taking place on the surfaces of the welding target 100.

However, in the present embodiment, the portion between the first interior electrode contact portion 100a and the first exterior electrode contact portion 100b of the welding target 100, and the portion between the second interior electrode contact portion 100c and the second exterior electrode contact portion 100d of the welding target 100 are cooled, so as to keep the molten material inside the welding target 100 from reaching the surfaces. As a result, a defect on the surface of the welding target 100 can substantially be avoided.

Thus, since the present embodiment uses the same fluid for the cleaning system 30 and the cooling system 50, the same fluid supply source and the passages 31 and the like in which the fluid flows can be shared between the cleaning system 30 and the cooling system 50. Therefore, cooling of the welding target 100 and the welding electrode (particularly, the first electrode 10) and cleaning of the welding target 100 are possible with a simple structure, without an increase in the costs of the resistance welding apparatus 1. Further, a defect on the surface of the welding target 100 can substantially be avoided.

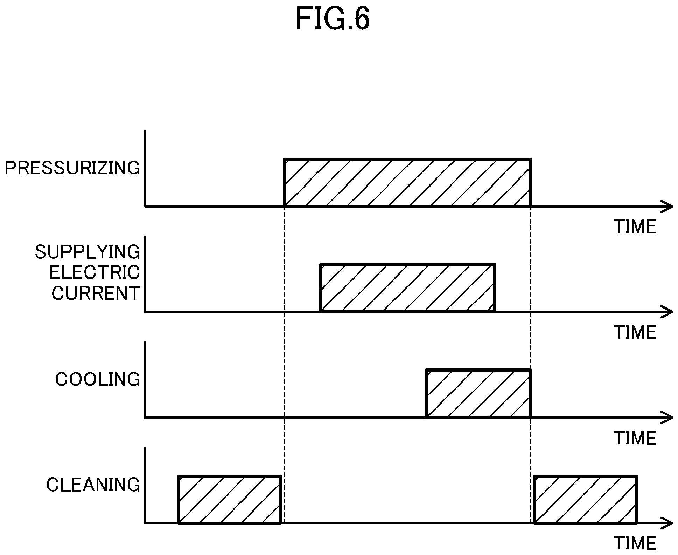

Note that the first embodiment described above deals with a case where the cooling is started before an electric current is supplied to the welding target 100. However, as illustrated in FIG. 6, the cooling may be started after the supply of an electric current is started. This will allow welding to be properly performed without excessively cooling the first electrode 10, the second electrode 20, and the welding target 100. It is also possible to start the cooling after the supply of an electric current is finished (i.e., after welding), as long as a defect does not occur on the surface of the welding target 100.

### (Second Embodiment)

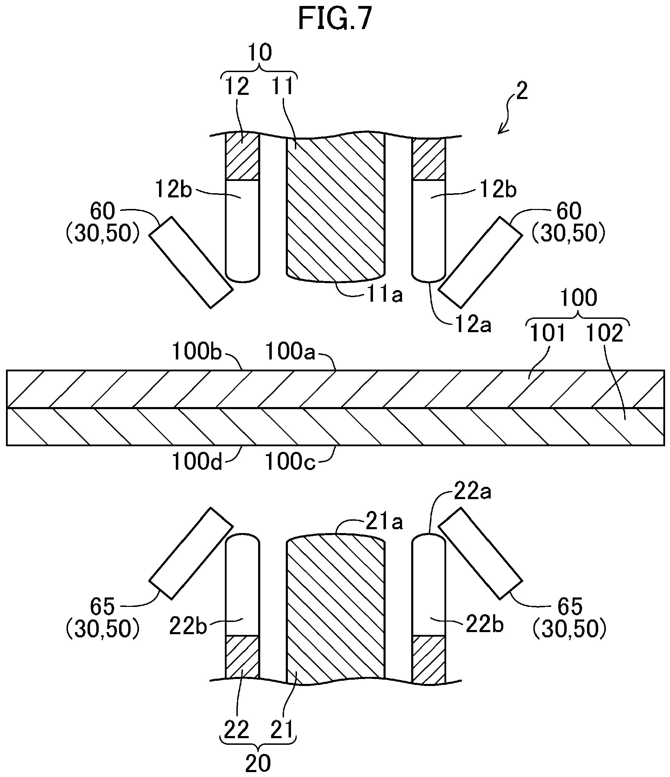

FIG. 7 shows a main part of a resistance welding apparatus 2, according to a second embodiment. Note that the same constituent elements as those shown in FIG. 1 share the same numeral signs, and detailed description thereof shall be omitted.

In the present invention, a plurality of (two in this embodiment) first injection members 60 that inject the fluid to the perimeter of the first interior electrode 11, instead of providing the cleaning injection ports and the cooling injection ports to the first interior electrode 11, and a plurality of (two in this embodiment) second injection members 65 that inject the fluid to the perimeter of the second interior electrode 21, instead of providing the cleaning injection ports and the cooling injection ports to the second interior electrode 21. The first and second injection members 60 and 65 perform both cleaning and cooling, and constitute a part of the cleaning system 30 and a part of the cooling system 50. The number of the first and second injection members 60 and 65 may be determined in consideration of the cleaning ability and the cooling capacity.

The first injection members 60 are each connected to the dry ice blast washer through a not-shown connection pipe, and are configured to allow injection of the fluid to a relatively broad range. That is, the first injection members 60 are each configured to allow injection of the fluid to the first interior electrode contact portion 100a and the first exterior electrode contact portion 100b of the welding target 100 as well as to a portion between both of these electrode contact portions 100a, 100b, before the first interior electrode 11 and the first exterior electrode 12 contact the welding target 100. Similarly to the first injection member 60, the second injection members 65 are each connected to the dry ice blast washer through a not-shown connection pipe, and are configured to allow injection of the fluid to the second interior electrode contact portion 100c and the second exterior electrode contact portion 100d of the welding target 100 as well as to a portion between both of these electrode contact portions 100c, 100d, before the second interior electrode 21 and the second exterior electrode 22 contact the welding target 100.

The cooling system 50 includes passages (not shown) provided to the first interior electrode 11 and the second interior electrode 21. When the fluid is supplied from the dry ice blast washer to the first and second injection members 60 and 65, the fluid is also supplied to these passages to cool the first interior electrode 11 and the second interior electrode 21.

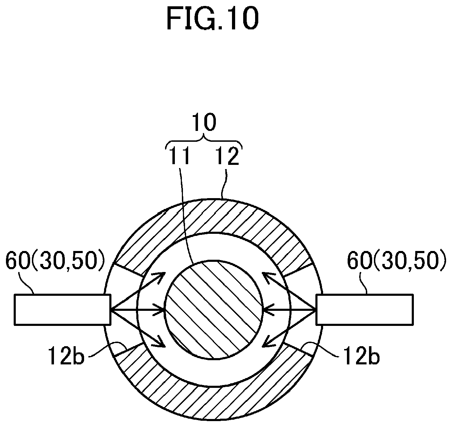

In two positions of the first exterior electrode 12 relative to the circumferential direction corresponding to the two first injection members 60, there are cut-out portions 12b cut out upward from the distal end of the first exterior electrode 12 (see particularly FIG. 10). With these cut-out portions 12b, the first exterior electrode 12 is able to contact the welding target 100 without interfering the first injection members 60.

Similarly, in two positions of the second exterior electrode 22 relative to the circumferential direction corresponding to the two second injection members 65, there are cut-out portions 22b cut out downward from the distal end of the second exterior electrode 22. With these cut-out portions 22b, the second exterior electrode 22 is able to contact the welding target 100 without interfering the second injection members 65.

In the present embodiment, when the resistance welding apparatus 2 is used to weld the welding target 100, steps of cleaning, pressurizing, supplying of an electric current, and cooling described in the above the first embodiment take place according to the timing chart of FIG. 3 or FIG. 6.

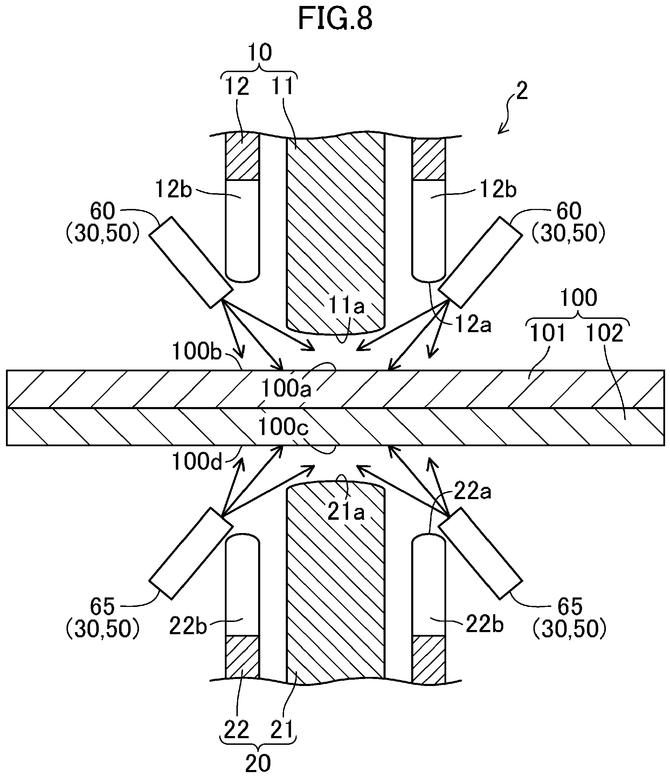

FIG. 8 shows a state of the resistance welding apparatus 2 at the time of cleaning. During this state, the first interior electrode 11 and the second interior electrode 21 are close to the welding target 100, and the fluid is injected from the first and second injection members 60 and 65. Thus, the fluid that has been injected from the first injection members 60 also hits the contact portion 11a of the first interior electrode 11. As a result, the fluid cleans the contact portion 11a of the first interior electrode 11, in addition to the first interior electrode contact portion 100a and the first exterior electrode contact portion 100b of the welding target 100. Note that the arrangement of the first injection members 60 may be changed to the further outer circumferential side, so as to enable cleaning of the contact portion 12a of the first exterior electrode 12.

Further, the fluid that has been injected from the second injection members 65 also hits the contact portion 21a of the second interior electrode 21. As a result, the fluid cleans the contact portion 21a of the second interior electrode 21, in addition to the second interior electrode contact portion 100c and the second exterior electrode contact portion 100d of the welding target 100. Note that the arrangement of the second injection members 65 may be changed to the further outer circumferential side, so as to enable cleaning of the contact portion 22a of the second exterior electrode 22.

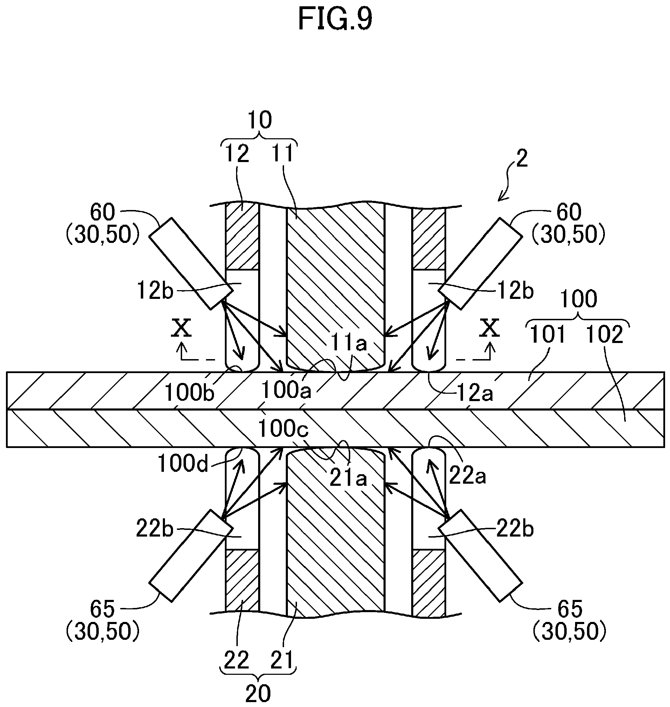

FIGS. 9 and 10 show a state of the resistance welding apparatus 2 at the time of cooling. During this state, the first interior electrode 11, the first exterior electrode 12, the second interior electrode 21, and the second exterior electrode 22 contact the welding target 100, and the fluid is injected from the first and second injection members 60 and 65. The fluid injected from the first injection members 60 is injected toward the portion between the first interior electrode contact portion 100a and the first exterior electrode contact portion 100b of the welding target 100 through the cut-out portions 12b, and cools that portion. Further, since the fluid that has been injected from the first injection members 60 hits the outer circumferential face of the first interior electrode 11 and the inner circumferential face of the first exterior electrode 12, the distal ends of the first interior electrode 11 and the first exterior electrode 12 are cooled by the fluid from the outer surface. Further, since the fluid flows inside the first interior electrode 11, the first interior electrode 11 is also cooled from the inside by the fluid.

The fluid injected from the second injection members 65 is injected toward the portion between the second interior electrode contact portion 100c and the second exterior electrode contact portion 100d of the welding target 100 through the cut-out portions 22b, and cools that portion. Further, since the fluid that has been injected from the second injection members 65 hits the outer circumferential face of the second interior electrode 21 and the inner circumferential face of the second exterior electrode 22, the distal ends of the second interior electrode 21 and the second exterior electrode 22 are cooled by the fluid from the outer surface. Further, since the fluid flows inside the second interior electrode 21, the second interior electrode 21 is also cooled from the inside by the fluid.

Thus, since the present embodiment also uses the same fluid for the cleaning system 30 and the cooling system 50, the same fluid supply source, the injection members, and the connection pipes and the like in which the fluid flows can be shared between the cleaning system 30 and the cooling system 50. Therefore, similarly to the foregoing first embodiment, cooling of the welding target 100 and the welding electrode (particularly, the first electrode 10) and cleaning of the welding target 100 are possible with a simple structure, without an increase in the costs of the resistance welding apparatus 2. Further, a defect on the surface of the welding target 100 can substantially be avoided.

The technique disclosed herein is not limited to the above-described embodiments.

For example, the first and second embodiments deal with a case where the welding electrode includes the first electrode 10 and the second electrode 20 which contact one side and the opposite side of the welding target, respectively, so as to sandwich the welding target therebetween. However, the welding electrode may include a pair of electrodes configured to contact separate locations of the same side of the welding target 100, and that supplies an electric current to the welding target 100. That is, the welding electrode may be configured to perform indirect resistance welding.

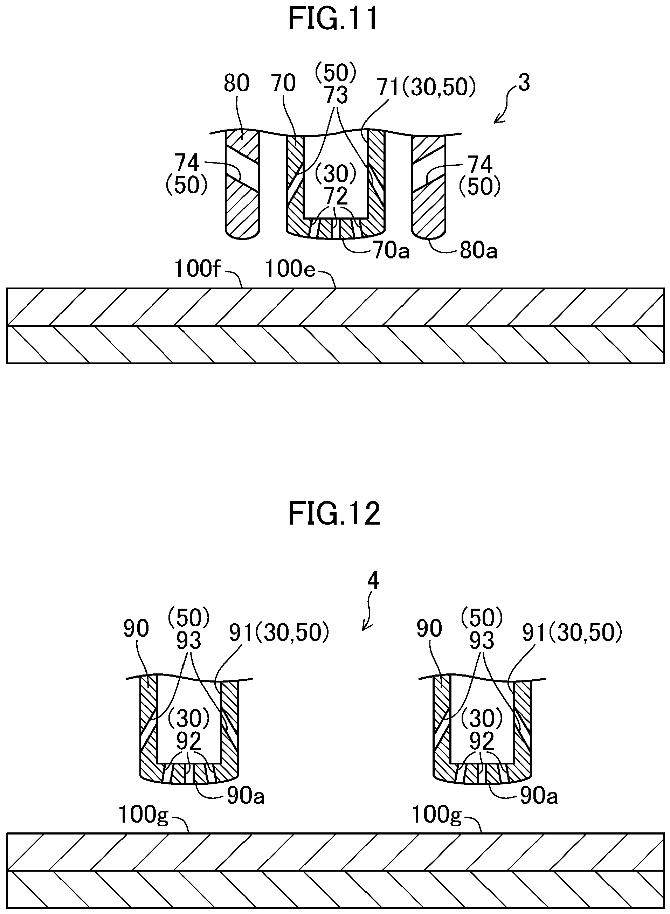

FIG. 11 shows a main part of an indirect type resistance welding apparatus 3. In this resistance welding apparatus 3, the pair of electrodes are an interior electrode 70 and an exterior electrode 80 arranged on the outer circumferential side of the interior electrode 70 and distanced from the interior electrode 70, as in the first electrode 10 (or the second electrode 20) of the above first and second embodiments. The interior electrode 70 and the exterior electrode 80 may be configured similarly to the first interior electrode 11 and the first exterior electrode 12 (or the second interior electrode 21 and the second exterior electrode 22) of the first embodiment, respectively. The cleaning system 30 and the cooling system 50 may be configured similarly to the first embodiment.

Then, before the interior electrode 70 and the exterior electrode 80 contact the welding target 100, the fluid supplied to the passage 71 inside the interior electrode 70 is injected from the cleaning injection ports 72 and the cooling injection ports 73 to clean an interior electrode contact portion 100e and an exterior electrode contact portion 100f of the welding target 100 to respectively contact the contact portion 70a of the interior electrode 70 and the contact portion 80a of the exterior electrode 80.

Further, during and/or after welding, the fluid supplied to the passage 71 is injected from the cooling injection ports 73 to cool the portion of the welding target 100 between the interior electrode contact portion 100e and the exterior electrode contact portion 100f. The fluid that has been injected from the cooling injection ports 73 is released to the outside of the exterior electrode 80 through release holes 74 provided to the exterior electrode 80. Further, the fluid cools the interior electrode 70 by flowing in the passage 71 in the interior electrode 70. Note that, similarly to the first embodiment, the exterior electrode 80 may be cooled by the fluid injected from the cooling injection ports 73.

Alternatively, in the resistance welding apparatus 3, a plurality of injection members similar to the first injection members 60 (or the second injection members 65) of the second embodiment may be provided around the interior electrode 70. In this case, the interior electrode 70 and the exterior electrode 80 may be configured similarly to the first interior electrode 11 and the first exterior electrode 12 (or the second interior electrode 21 and the second exterior electrode 22) of the second embodiment, respectively.

FIG. 12 shows a main part of another indirect type resistance welding apparatus 4, which is different from that shown in FIG. 11. In the resistance welding apparatus 4, the pair of electrodes are both columnar electrodes 90. The electrodes 90 may be configured similarly to the first interior electrode 11 (or the second interior electrode 21) of the first embodiment. The cleaning system 30 and the cooling system 50 may be configured similarly to the first embodiment.

Then, before the electrodes 90 contact the welding target 100, the fluid supplied to the passage 91 of each electrode 90 is injected from the cleaning injection ports 92 and the cooling injection ports 93 to clean each electrode contact portion 100g of the welding target 100 to contact a contact portion 90a of the electrode 90. At this time, the fluid that has been injected from the cooling injection ports 93 of the electrodes 90 cleans only the portion around the electrode contact portion 100g of the welding target 100.

Further, during and/or before welding, the fluid supplied to the passage 91 of each electrode 90 is injected from the cooling injection ports 93 to cool a portion near the electrode contact portion 100g of the welding target 100. Further, the fluid cools each electrode 90 by flowing in the passage 91 in the electrode 90.

Alternatively, in the resistance welding apparatus 4, a plurality of injection members similar to the first injection members 60 (or the second injection members 65) of the second embodiment may be provided around the electrode 90. In this case, each electrode 90 may be configured similarly to the first interior electrode 11 (or the second interior electrode 21) of the second embodiment.

Further, the first electrode 10 and the second electrode 20 configured to contact on one side and the opposite side of the welding target 100 so as to sandwich the welding target 100 therebetween and to supply an electric current to the welding target 100 may be both replaced with columnar electrodes (i.e., those similar to the electrodes 90). In this case, the resistance welding apparatus may be configured to clean each electrode contact portion of the welding target 100 to contact the electrode, and to cool the electrode 90 and the portion near the electrode contact portion 100g of the welding target 100, similarly to the resistance welding apparatus 4.

The foregoing embodiments are merely preferred examples in nature, and the scope of the present invention should not be interpreted in a limited manner. The scope of the present invention should be defined by the appended claims, and all the modifications and changes which fall within the scope of equivalents of the appended claims are within the scope of the present invention.

## Claims

1. A resistance welding apparatus (1, 2, 3, 4) including a welding electrode (10, 20, 70, 80, 90) that contacts a welding target (100) and supplies an electric current to the welding target (100) to weld the welding target (100), the resistance welding apparatus (1, 2, 3, 4) comprising:
a cleaning system (30) that, before the welding electrode (10, 20, 70, 80, 90) contacts the welding target (100), supplies a fluid to clean, of a contact portion (11a, 12a, 21a, 22a, 70a, 80a, 90a) of the welding electrode (10, 20, 70, 80, 90) and a contact portion (100a, 100b, 100c, 100d, 100e, 100f, 100g) of the welding target (100), at least the contact portion (100a, 100b, 100c, 100d, 100e, 100f, 100g) of the welding target (100), the contact portion (100a, 100b, 100c, 100d, 100e, 100f, 100g) of the welding target (100) being to contact the welding electrode (10, 20, 70, 80, 90), the contact portion (11a, 12a, 21a, 22a, 70a, 80a, 90a) of the welding electrode (10, 20, 70, 80, 90) being to contact the welding target (100); and
a cooling system (50) that, during and/or after welding the welding target (100) by the welding electrode (10, 20, 70, 80, 90), supplies the fluid to cool the welding electrode (10, 20, 70, 80, 90) and a portion near the contact portion (100a, 100b, 100c, 100d, 100e, 100f, 100g) of the welding target (100).

2. The resistance welding apparatus (1, 2, 3, 4) of claim 1, wherein:
the cleaning system (30) includes a passage (31, 41, 71, 91) which is formed inside the welding electrode (10, 20, 70, 90) and through which the fluid flows, and a cleaning injection port (32, 42, 72, 92) which is connected to the passage (31, 41, 71, 91) and open to a surface of the welding electrode (10, 20, 70, 90), and which injects the fluid from the passage (31, 41, 71, 91) to the contact portion (100a, 100b, 100c, 100d, 100e, 100f, 100g) of the welding target (100); and
the cooling system (50) includes the passage (31, 41, 71, 91), and a cooling injection port (33, 43, 73, 93) which is connected to the passage (31, 41, 71, 91) and open to the surface of the welding electrode (10, 20, 70, 90) and which injects the fluid from the passage (31, 41, 71, 91) to a portion near the contact portion (100a, 100b, 100c, 100d, 100e, 100f, 100g) of the welding target (100).

3. The resistance welding apparatus (1, 2, 3, 4) of claim 1 or 2, wherein:
the welding electrode includes a pair of electrodes (90) configured to contact separate locations of a single surface of the welding target (100) and to supply an electric current to the welding target (100), the contact portion of the welding target (100) including a plurality of contact portions (100g) which are to contact the pair of electrodes (90), the contact portion of the welding electrode including a plurality of contact portions (90a) which are to contact the welding target (100);
the cleaning system (30) is configured to clean, of one of the contact portions (90a) of one of the pair of electrodes (90) and one of the contact portions (100g) of the welding target (100), at least the one of the contact portions (100g) of the welding target (100), and to clean, of another of the contact portions (90a) of another of the pair of electrodes (90) and another of the contact portions (100g) of the welding target (100), at least the another of the contact portions (100g) of the welding target (100); and
the cooling system (50) is configured to cool the pair of electrodes (90) and portions near the contact portions (100g) of the welding target (100).

4. The resistance welding apparatus (1, 2, 3, 4) of claim 1 or 2, wherein:
the welding electrode includes a pair of electrodes configured to contact separate locations of a single surface of the welding target (100) and to supply an electric current to the welding target (100), the contact portion of the welding target (100) including a plurality of contact portions (100e, 100f) which are to contact the pair of electrodes;
the pair of electrodes include an interior electrode (70) having the contact portion (70a) which is to contact the welding target (100) and an exterior electrode (80) having the contact portion (80a) which is to contact the welding target (100), the exterior electrode (80) being arranged on an outer circumferential side of the interior electrode (70), and being distanced from the interior electrode (70), the contact portions (100e, 100f) of the welding target (100) being to contact the interior electrode (70) and the exterior electrode (80);
the cleaning system (30) is configured to clean, of the contact portion (70a) of the interior electrode (70), the contact portion (80a) of the exterior electrode (80), and the contact portions (100e, 100f) of the welding target (100), at least the contact portions (100e, 100f) of the welding target (100); and
the cooling system (50) is configured to cool the interior electrode (70) and a portion between the contact portions (100e, 100f) of the welding target (100).

5. The resistance welding apparatus (1, 2, 3, 4) of claim 1 or 2, wherein:
the welding electrode includes a first electrode (10) and a second electrode (20) which contact one side and an opposite side of the welding target (100), so as to sandwich the welding target (100) therebetween, and which supply an electric current to the welding target (100), the contact portion of the welding target (100) including first, second, third, and fourth contact portions (100a, 100b, 100c, 100d);
the first electrode (10) includes a first interior electrode (11) having the contact portion (11a) which is to contact the welding target (100) and a first exterior electrode (12) having the contact portion (12a) which is to contact the welding target (100), the first exterior electrode (12) being arranged on an outer circumferential side of the first interior electrode (11) and being distanced from the first interior electrode (11), the first and second contact portions (100a, 100b) of the welding target (100) being to contact the first interior electrode (11) and the first exterior electrode (12);
the second electrode (20) includes a second interior electrode (21) having the contact portion (21a) which is to contact the welding target (100) and a second exterior electrode (22) having the contact portion (22a) which is to contact the welding target (100), the second exterior electrode (22) being arranged on an outer circumferential side of the second interior electrode (21) and being distanced from the second interior electrode (21), the third and fourth contact portions (100c, 100d) of the welding target (100) being to contact the second interior electrode (21) and the second exterior electrode (22);
the cleaning system (30) is configured to clean, of the contact portion (11a) of the first interior electrode (11), the contact portion (12a) of the first exterior electrode (12), and the first and second contact portions (100a, 100b) of the welding target (100), at least the first and second contact portions (100a, 100b) of the welding target (100), and to clean, of the contact portion (21a) of the second interior electrode (21), the contact portion (22a) of the second exterior electrode (22), and the third and fourth contact portions (100c, 100d) of the welding target (100), at least the third and fourth contact portions (100c, 100d) of the welding target (100); and
the cooling system (50) is configured to cool the first interior electrode (11) and a portion between the first and second contact portions (100a, 100b) of the welding target (100), and to cool the second interior electrode (21) and a portion between the third and fourth contact portions (100c, 100d) of the welding target (100).

6. A resistance welding method of welding a welding target (100) by having a welding electrode (10, 20, 70, 80, 90) contact a welding target (100) and supplying an electric current to the welding target (100) through the welding electrode (10, 20, 70, 80, 90), the method comprising:
cleaning, before the welding electrode (10, 20, 70, 80, 90) contacts the welding target (100), of a contact portion (11a, 12a, 21a, 22a, 70a, 80a, 90a) of the welding electrode (10, 20, 70, 80, 90) and a contact portion (100a, 100b, 100c, 100d, 100e, 100f, 100g) of the welding target (100), at least the contact portion (100a, 100b, 100c, 100d, 100e, 100f, 100g) of the welding target (100) by supplying a fluid, the contact portion (100a, 100b, 100c, 100d, 100e, 100f, 100g) of the welding target (100) being to contact the welding electrode (10, 20, 70, 80, 90), the contact portion (11a, 12a, 21a, 22a, 70a, 80a, 90a) of the welding electrode (10, 20, 70, 80, 90) being to contact the welding target (100); and
cooling, during and/or after welding the welding target (100) by the welding electrode (10, 20, 70, 80, 90), the welding electrode (10, 20, 70, 80, 90) and a portion near the contact portion (100a, 100b, 100c, 100d, 100e, 100f, 100g) of the welding target (100) by supplying the fluid.

7. The resistance welding method of claim 6, wherein:
the welding electrode (10, 20, 70, 90) includes a passage (31, 41, 71, 91) which is formed inside the welding electrodes (10, 20, 70, 90) and through which the fluid flows, a cleaning injection port (32, 42, 72, 92) which is connected to the passages (31, 41, 71, 91) and open to a surface of the welding electrodes (10, 20, 70, 90), and which injects the fluid from the passage (31, 41, 71, 91) to the contact portion (100a, 100b, 100c, 100d, 100e, 100f, 100g) of the welding target (100), and a cooling injection port (33, 43, 73, 93) which is connected to the passage (31, 41, 71, 91) and open to the surface of the welding electrodes (10, 20, 70, 90) and which injects the fluid from the passage (31, 41, 71, 91) to the portion near the contact portion (100a, 100b, 100c, 100d, 100e, 100f, 100g) of the welding target (100);
in the cleaning, the fluid from the passage (31, 41, 71, 91) is injected to the contact portion (100a, 100b, 100c, 100d, 100e, 100f, 100g) of the welding target (100) through the cleaning injection port (32, 42, 72, 92); and
in the cooling, the fluid from the passage (31, 41, 71, 91) is injected to the portion near the contact portion (100a, 100b, 100c, 100d, 100e, 100f, 100g) of the welding target (100) through the cooling injection port (33, 43, 73, 93).

8. The resistance welding method according to claim 6 or 7, wherein:
the welding electrode includes a pair of electrodes (90) configured to contact separate locations of a single surface of the welding target (100) and to supply an electric current to the welding target (100), the contact portion of the welding target (100) including a plurality of contact portions (100g) which are to contact the pair of electrodes (90), the contact portion of the welding electrode including a plurality of contact portions (90a) which are to contact the welding target (100);
the cleaning is a step of cleaning, of one of the contact portions (90a) of one of the pair of electrodes (90) and one of the contact portions (100g) of the welding target (100), at least the one of the contact portions (100g) of the welding target (100), and to clean, of another of the contact portions (90a) of another of the pair of electrodes (90) and another of the contact portions (100g) of the welding target (100), at least the another of the contact portions (100g) of the welding target (100); and
the cooling is a step of cooling the pair of electrodes (90) and portions near the contact portions (100g) of the welding target (100).

9. The resistance welding method according to claim 6 or 7, wherein:
the welding electrode includes a pair of electrodes configured to contact separate locations of a single surface of the welding target (100) and to supply an electric current to the welding target (100), the contact portion of the welding target (100) including a plurality of contact portions (100e, 100f) which are to contact the pair of electrodes;
the pair of electrodes include an interior electrode (70) having the contact portion (70a) which is to contact the welding target (100) and an exterior electrode (80) having the contact portion (80a) which is to contact the welding target (100), the exterior electrode (80) being arranged on an outer circumferential side of the interior electrode (70), and being distanced from the interior electrode (70), the contact portions (100e, 100f) of the welding target (100) being to contact the interior electrode (70) and the exterior electrode (80);
the cleaning is a step of cleaning, of the contact portion (70a) of the interior electrode (70), the contact portion (80a) of the exterior electrode (80), and the contact portions (100e, 100f) of the welding target (100), at least the contact portions (100e, 100f) of the welding target (100); and
the cooling is a step of cooling the interior electrode (70) and a portion between the contact portions (100e, 100f) of the welding target (100).

10. The resistance welding method according to claim 6 or 7, wherein:
the welding electrode includes a first electrode (10) and a second electrode (20) which contact different sides of the welding target (100), so as to sandwich the welding target (100) therebetween, and which supply an electric current to the welding target (100), the contact portion of the welding target (100) including first, second, third, and fourth contact portions (100a, 100b, 100c, 100d);
the first electrode (10) includes a first interior electrode (11) having the contact portion (11a) which is to contact the welding target (100) and a first exterior electrode (12) having the contact portion (12a) which is to contact the welding target (100), the first exterior electrode (12) being arranged on an outer circumferential side of the first interior electrode (11) and being distanced from the first interior electrode (11), the first and second contact portions (100a, 100b) of the welding target (100) being to contact the first interior electrode (11) and the first exterior electrode (12);
the second electrode (20) includes a second interior electrode (21) having the contact portion (21a) which is to contact the welding target (100) and a second exterior electrode (22) having the contact portion (22a) which is to contact the welding target (100), the second exterior electrode (22) being arranged on an outer circumferential side of the second interior electrode (21) and being distanced from the second interior electrode (21), the third and fourth contact portions (100c, 100d) of the welding target (100) being to contact the second interior electrode (21) and the second exterior electrode (22);
the cleaning is a step of cleaning, of the contact portion (11a) of the first interior electrode (11), the contact portion (12a) of the first exterior electrode (12), and the first and second contact portions (100a, 100b) of the welding target (100), at least the first and second contact portions (100a, 100b) of the welding target (100), and cleaning, of the contact portion (21a) of the second interior electrode (21), the contact portion (22a) of the second exterior electrode (22), and the third and fourth contact portions (100c, 100d) of the welding target (100), at least the third and fourth contact portions (100c, 100d) of the welding target (100); and
the cooling is a step of cooling the first interior electrode (11) and a portion between the first and second contact portions (100a, 100b) of the welding target (100), and cooling the second interior electrode (21) and a portion between the third and fourth contact portions (100c, 100d) of the welding target (100).
